# EUROPEAN PATENT APPLICATION

(11) **EP 4 574 630 A1**
(43) Date of publication of application: **25.06.2025**
(21) Application number: 24220857.7
(22) Date of filing: 18.12.2024
(51) Int. Cl.: B62D 25/08, B62D 29/00, B62D 27/06

(54) **VEHICLE BODY STRUCTURE AND VEHICLE BODY FABRICATION METHOD**

(30) Priority: 22.12.2023 JP 2023217306
(71) Applicant: TOYOTA JIDOSHA KABUSHIKI KAISHA, Aichi-ken, 471-8571 (JP)
(72) Inventor: MURATA, Soshiro, TOYOTA-SHI, AICHI-KEN, 471-8571 (JP)
(74) Representative: Cabinet Beau de Loménie

(57) **Abstract**

A vehicle body structure includes a first vehicle body structural component (12), a second vehicle body structural component (22) and a joining member (30, 34). The first vehicle body structural component (12) is a metal casting and includes a main body portion (14) and a protruding portion (16), which protrudes from the main body portion (14). The second vehicle body structural component (22) includes an insertion-receiving portion (22B) in which the protruding portion (16) is insertable. The joining member (30, 34) joins the protruding portion (16) with the insertion-receiving portion (22B).

## Description

### BACKGROUND

### Technical Field

The present disclosure relates to a vehicle body structure and a vehicle body fabrication method.

### Related Art

Japanese Patent Application Laid-Open (JP-A) No. 2020-152188 discloses a technology relating to an automobile body. In this automobile body, a front side member, a crash box or the like that structures a portion of the vehicle body is joined to a gusset fabricated of die-cast aluminium that similarly structures a portion of the vehicle body.

In this conventional technology, however, a site at the gusset of joining to the front side member, crash box or the like has a tubular shape, and the front side member, crash box or the like also has a tubular shape.

Therefore, when the gusset is joined to the front side member or the like, a spacer or the like must be arranged, which is subject to tension from a joining member, and this is likely to make vehicle body fabrication procedures more complex.

In light of the circumstances described above, an object of the present disclosure is to provide a vehicle body structure and a vehicle body fabrication process that may assure joining strength between a cast vehicle body structural component and another vehicle body structural component while suppressing an increase in complexity of vehicle body fabrication procedures.

### SUMMARY

A vehicle body structure according to a first aspect includes: a first vehicle body structural component that is a metal casting, the first vehicle body structural component including a main body portion and a protruding portion that protrudes from the main body portion; a second vehicle body structural component including an insertion-receiving portion in which the protruding portion is insertable; and a joining member that joins the protruding portion with the insertion-receiving portion.

According to the vehicle body structure according to the first aspect, the first vehicle body structural component that is a metal casting is provided, and the first vehicle body structural component is provided with the main body portion. Therefore, in the present aspect, for example, a site of the vehicle body at which structure is complex is formed by the main body portion, and vehicle body fabrication procedures may be simplified.

In the present aspect, the second vehicle body structural component is also provided, and a portion of the vehicle body is formed by this second vehicle body structural component.

When a first vehicle body structure component and a second vehicle body structure component are joined, a portion joining these components is required, which is subject to tension from a joining member. However, when a separate spacer or the like that is subject to tension from a joining member is arranged, vehicle body fabrication procedures are likely to be more complex.

Meanwhile, in the present aspect, the first vehicle body structural component is provided with the protruding portion that protrudes from the main body portion. In a state in which this protruding portion is inserted into the insertion-receiving portion provided at the second main body structural component, the protruding portion and the insertion-receiving portion may be joined by the joining member. Therefore, tension generated when the protruding portion and insertion-receiving portion are joined by the joining member may be borne by the protruding portion.

In a vehicle body structure according to a second aspect, in the vehicle body structure according to the first aspect, the protruding portion protrudes from the main body portion in a vehicle front-and-rear direction, and is inserted into the insertion-receiving portion in the vehicle front-and-rear direction, and the protruding portion and the insertion-receiving portion make area contact in at least one of a vehicle vertical direction or a vehicle width direction.

According to the vehicle body structure according to the second aspect, the protruding portion protrudes in the vehicle front-and-rear direction from the main body portion and is inserted into the insertion-receiving portion in the vehicle front-and-rear direction. The protruding portion and the insertion-receiving portion make area contact in at least one of the vehicle vertical direction or the vehicle width direction. Therefore, in the present aspect, when a load around the vehicle front-and-rear direction acts on the protruding portion and insertion-receiving portion, shifting of a positional relationship between the protruding portion and insertion-receiving portion may be suppressed.

In a vehicle body structure according to a third aspect, in the vehicle body structure according to the first aspect or second aspect, the joining member joins the protruding portion with the insertion-receiving portion in a direction orthogonal to the vehicle front-and-rear direction.

According to the vehicle body structure according to the third aspect, the joining member joins the protruding portion with the insertion-receiving portion in the direction orthogonal to the vehicle front-and-rear direction. Thus, a load around the vehicle front-and-rear direction acting on the protruding portion and insertion-receiving portion may be borne by the joining member.

In a vehicle body structure according to a fourth aspect, in the vehicle body structure according to the third aspect, the joining member includes a shaft portion that is inserted into the protruding portion and insertion-receiving portion in the direction orthogonal to the vehicle front-and-rear direction.

According to the vehicle body structure according to the fourth aspect, the joining portion is provided with the shaft portion, and the shaft portion is inserted into the protruding portion and the insertion-receiving portion in the direction orthogonal to the vehicle front-and-rear direction. Therefore, stiffness of a site of joining between the protruding portion and insertion-receiving portion with respect to a load around the vehicle front-and-rear direction may be assured.

In a vehicle body structure according to a fifth aspect, in the vehicle body structure according to any one of the first to fourth aspects, the protruding portion includes a rib portion that extends along a protrusion direction in which the protruding portion protrudes from the main body portion.

According to the vehicle body structure according to the fifth aspect, the rib portion is provided at the protruding portion. This rib portion extends in the protrusion direction of the protruding portion from the main body portion. Thus, stiffness of the protruding portion with respect to a load in a direction orthogonal to the protrusion direction may be assured.

In a vehicle body structure according to a sixth aspect, in the vehicle body structure according to any one of the second to fifth aspects, a curved surface portion is provided at a region at the vehicle upper side of a distal end portion of the protruding portion, the curved surface portion curving to form a protrusion to the vehicle upper side as seen in the vehicle width direction.

According to the vehicle body structure according to the sixth aspect, the curved surface portion is provided at the region at the vehicle upper side of the distal end portion of the protruding portion, and this curved surface portion curves so as to protrude to the vehicle upper side as seen in the vehicle width direction. As a result, resistance when the protruding portion is inserted into the insertion-receiving portion may be reduced.

In a vehicle body structure according to a seventh aspect, in the vehicle body structure according to any the sixth aspect, a lower edge portion of a region at the vehicle front side of the protruding portion slopes downward from the vehicle front side toward the vehicle rear side as seen in the vehicle width direction.

According to the vehicle body structure according to the seventh aspect, the lower edge portion in the region at the vehicle front side of the protruding portion slopes downward from the vehicle front side toward the vehicle rear side as seen in the vehicle width direction. Therefore, lengths in the vehicle vertical direction of the region at the vehicle front side of the protruding portion are shorter toward the vehicle front side, and the protruding portion may be more easily inserted into the insertion-receiving portion.

In a vehicle body structure according to an eighth aspect, in the vehicle body structure according to any one of the first to seventh aspects, the second vehicle body structural component is a crash box including: the insertion-receiving portion; and an impact-absorbing portion that is capable of absorbing a portion of an impact load applied in the vehicle front-and-rear direction by compressively deforming in the vehicle front-and-rear direction.

According to the vehicle body structure according to the eighth aspect, the second vehicle body structural component is the crash box, and a portion of an impact load applied in the vehicle front-and-rear direction may be absorbed by the impact-absorbing portion of the crash box compressively deforming in the vehicle front-and-rear direction. Because the protruding portion is inserted into the insertion-receiving portion provided at the crash box, when the crash box is being assembled to the first vehicle body structural component, the protruding portion may be used as a guide for guiding the crash box to an assembled position.

In a vehicle body structure according to a ninth aspect, in the vehicle body structure according to any one of the first to eighth aspects, the main body portion includes a wheel well portion capable of accommodating a portion of a tire.

According to the vehicle body structure according to the ninth aspect, the main body portion of the first vehicle body structural component that is a metal casting includes the wheel well portion capable of accommodating a portion of a tire. As a result, a number of components structuring the vehicle body may be reduced compared to a structure in which the protruding portion and the wheel well are structured by separate components.

In a vehicle body structure according to a tenth aspect, in the vehicle body structure according to the ninth aspect, the main body portion includes: a pair of wheel well portions disposed to be spaced apart in the vehicle width direction; and a connecting portion that links the wheel well portions in the vehicle width direction.

According to the vehicle body structure according to the tenth aspect, the main body portion of the first vehicle body structural component that is a metal casting includes the pair of wheel well portions that are disposed to be spaced apart in the vehicle width direction and the connecting portion that links these wheel well portions in the vehicle width direction. Therefore, in the present aspect, the pair of wheel well portions may be assembled to the vehicle body as a single component during fabrication of the vehicle body. Thus, fabrication procedures of the vehicle body may be simplified while a number of components structuring the vehicle body is reduced.

A vehicle body fabrication process according to an eleventh aspect includes: casting a first vehicle body structural component including a main body portion and a protruding portion that protrudes from the main body portion; inserting the protruding portion into an insertion-receiving portion provided at a second vehicle body structural component; and joining the protruding portion with the insertion-receiving portion by a joining member.

According to the vehicle body fabrication process according to the eleventh aspect, firstly, the first vehicle body structural component is cast. The first vehicle body structural component that is cast is provided with the main body portion and the protruding portion protruding from the main body portion. Subsequently, the protruding portion is inserted into the insertion-receiving portion provided at the second vehicle body structural component, and the protruding portion and insertion-receiving portion are joined by the joining member. At this time, tension generated when the protruding portion and insertion-receiving portion are joined by the joining member is borne by the protruding portion.

As described above, the vehicle body structure and vehicle body fabrication process according to the present disclosure have excellent effects both in that joining strength between a cast vehicle body structural component and another vehicle body structural component may be assured and in that an increase in complexity of vehicle body fabrication procedures may be suppressed.

### BRIEF DESCRIPTION OF THE DRAWINGS

Exemplary embodiments of the present disclosure will be described in detail based on the following figures, wherein:
Fig. 1 is an exploded perspective view showing structures of a vehicle body in which a vehicle body structure according to a first exemplary embodiment is employed.
Fig. 2 is a sectional view seen from a vehicle width side (a sectional view showing a state cut along line 2-2 in Fig. 1), showing structures of principal portions of the vehicle body in which the vehicle body structure according to the first exemplary embodiment is employed.
Fig. 3 is a perspective view showing structures of the vehicle body in which the vehicle body structure according to the first exemplary embodiment is employed.
Fig. 4 is an exploded perspective view showing structures of a vehicle body in which a vehicle body structure according to a second exemplary embodiment is employed.
Fig. 5 is a side view (a view seen in the direction of arrow 5 in Fig. 4) showing structures of a crash box of the vehicle body in which the vehicle body structure according to the second exemplary embodiment is employed.

### DETAILED DESCRIPTION

### = First Exemplary Embodiment =

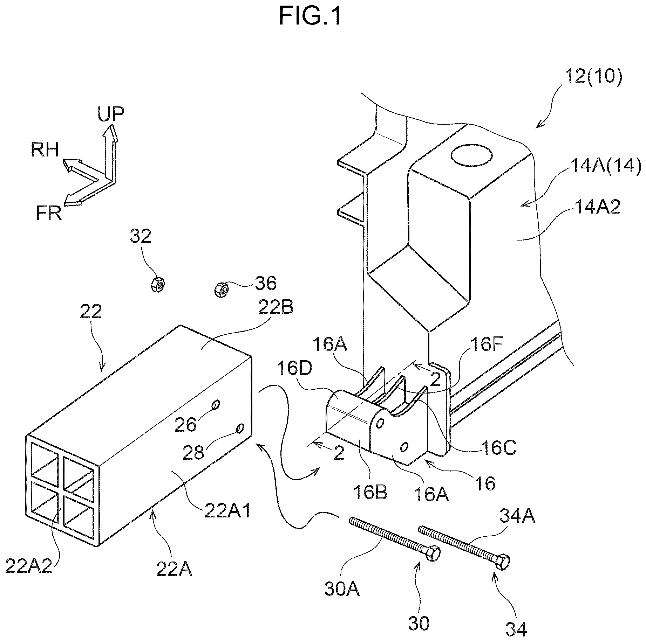

Below, a first exemplary embodiment of a vehicle body structure according to the present disclosure is described using Fig. 1 to Fig. 3. An arrow FR that is shown where appropriate in the drawings indicates a vehicle front side, an arrow UP indicates a vehicle upper side, and an arrow RH indicates a vehicle width direction right side.

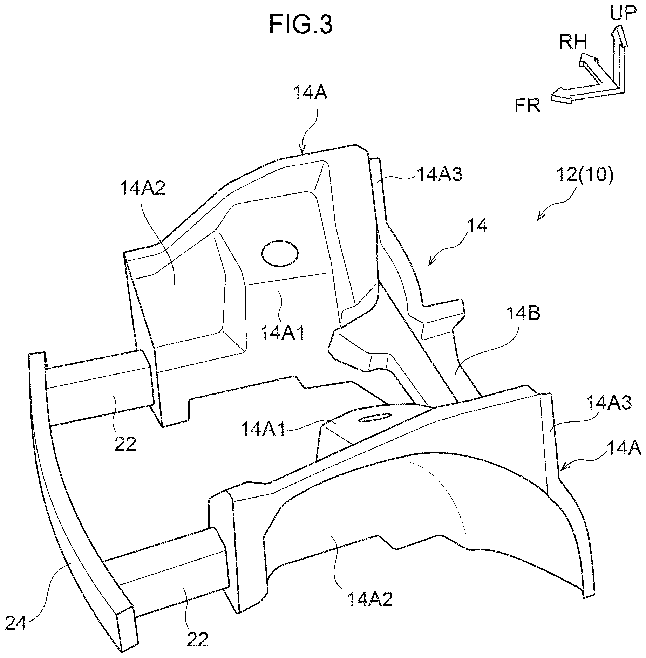

First, general structures of a vehicle body 10 in which the vehicle body structure according to the present exemplary embodiment is employed are described using Fig. 3. In the present exemplary embodiment, the vehicle body 10 is basically structured with left-and-right symmetry. Accordingly, structures in a region at the vehicle width direction right side of the vehicle body 10 are principally described below; descriptions of structures in the region at the vehicle width direction left side are omitted as appropriate.

The vehicle body 10 is provided with a front part 12, a center part, which is not shown in the drawings, and a rear part, which is not shown in the drawings. The front part 12 structures a portion at the vehicle front side, is fabricated of die-cast aluminium and serves as a first vehicle body structural component. The center part structures a vehicle front-and-rear direction central portion and is provided with a battery and a battery frame that retains the battery. The rear part structures a portion at the vehicle rear side and is fabricated of die-cast aluminium. Although not described in detail, the rear part has a basically similar structure to the front part 12. In the present exemplary embodiment, the rear part also functions as a first vehicle body structural component.

As illustrated in Fig. 1, the front part 12 includes a main body portion 14 that structures principal portions thereof and a pair of protruding portions 16 that are provided integrally with the main body portion 14. The main body portion 14 includes a pair of side structure portions 14A and a connecting portion 14B that connects the side structure portions 14A with one another.

Each side structure portion 14A includes a suspension tower portion 14A1, a wheel well portion 14A2 and a front pillar lower portion 14A3. The suspension tower portion 14A1 is formed in a box shape of which the vehicle lower side is open, and a circular penetrating portion is formed in an upper face of the box shape. The suspension tower portion 14A1 supports a shock absorber, which is not shown in the drawings.

The wheel well portion 14A2 is provided integrally with the suspension tower portion 14A1 and is formed in a spherical surface shape that is capable of accommodating a portion of a tire, which is not shown in the drawings. The front pillar lower portion 14A3 is disposed at the vehicle rear side of the wheel well portion 14A2. The front pillar lower portion 14A3 extends in the vehicle vertical direction and structures a portion at the vehicle lower side of a front pillar.

The connecting portion 14B extends in the vehicle width direction and links vehicle rear sides of the side structure portions 14A with one another in the vehicle width direction. The connecting portion 14B is disposed so as to run along a front edge portion of the above-mentioned center part.

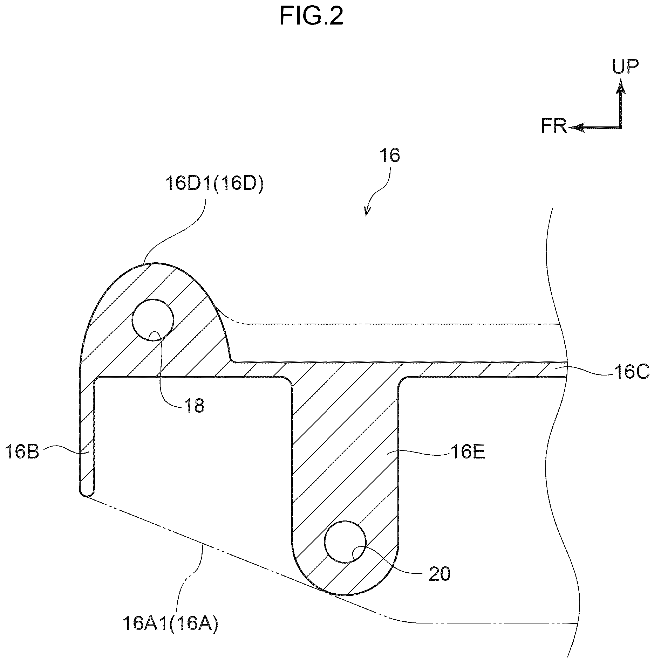

As shown in Fig. 1 and Fig. 2, the protruding portion 16 protrudes to the vehicle front side from a portion at the vehicle front side of each wheel well portion 14A2 of the main body portion 14. The protruding portion 16 includes a pair of side wall portions 16A, a front wall portion 16B, an upper wall portion 16C, a front side reinforcing portion 16D, a rear side reinforcing portion 16E and a rib portion 16F.

Each side wall portion 16A structures a portion at the vehicle width direction outer side of the protruding portion 16. The side wall portion 16A is formed in a plate shape that extends in the vehicle front-and-rear direction with the plate thickness direction in the vehicle width direction. A lower edge portion 16A1 of a portion at the vehicle front side of the side wall portion 16A slopes downward from the vehicle front side toward the vehicle rear side as seen in the vehicle width direction.

The front wall portion 16B structures a portion at the vehicle front side of the protruding portion 16 and is formed in a plate shape with the plate thickness direction in the vehicle front-and-rear direction. The front side reinforcing portion 16D is disposed at the vehicle upper side of the front wall portion 16B.

The upper wall portion 16C structures a portion at the vehicle upper side of the protruding portion 16 and is formed in a plate shape with the plate thickness direction in the vehicle vertical direction. The front side reinforcing portion 16D is disposed at the vehicle upper side of the vehicle front side of the upper wall portion 16C.

The front side reinforcing portion 16D structures a portion at the vehicle upper side of a distal end portion of the protruding portion 16, and is formed substantially in a solid cylindrical shape extending in the vehicle width direction. The front side reinforcing portion 16D is provided, in a region at the vehicle upper side thereof, with a curved surface portion 16D1 that curves to form a protrusion to the vehicle upper side as seen in the vehicle width direction. In addition, a penetrating portion 18 that penetrates in the vehicle width direction is formed in a central portion of the front side reinforcing portion 16D as seen in the vehicle width direction.

The rear side reinforcing portion 16E is disposed at the vehicle lower side of the upper wall portion 16C, at the vehicle lower side of the front side reinforcing portion 16D, and is formed in a substantially cuboid shape extending in the vehicle width direction. The rear side reinforcing portion 16E is provided, in a region at the vehicle lower side thereof, with a curved surface portion 16E1 that curves to form a protrusion to the vehicle lower side as seen in the vehicle width direction. In addition, a penetrating portion 20 that penetrates in the vehicle width direction is formed in a region at the vehicle lower side of the rear side reinforcing portion 16E as seen in the vehicle width direction.

The rib portion 16F extends in the vehicle front-and-rear direction with a plate thickness direction in the vehicle width direction, at a vehicle width direction central portion of the vehicle upper side of the upper wall portion 16C. The rib portion 16F links the front side reinforcing portion 16D with the wheel well portion 14A2 in the vehicle front-and-rear direction. The rib portion 16F reinforces the protruding portion 16 against loads in directions orthogonal to the vehicle front-and-rear direction. A portion of the side wall portion 16A at the vehicle upper side relative to the upper wall portion 16C may be regarded as a reinforcing rib portion that reinforces the protruding portion 16, similarly to the rib portion 16F.

A crash box 22 that serves as a second vehicle body structural component is assembled to the protruding portion 16 that is structured as described above. The crash box 22 structures a portion of the vehicle body 10. The crash box 22 includes an impact-absorbing portion 22A, which structures a region at the vehicle front side of the crash box 22, and an insertion-receiving portion 22B, which structures a region at the vehicle rear side of the crash box 22. The crash box 22 is integrally formed of an extruded member of an aluminium alloy.

More specifically, the impact-absorbing portion 22A includes a tubular portion 22A1, whose profile is a square tube shape extending in the vehicle front-and-rear direction, and rib portions 22A2 that are provided inside the tubular portion 22A1. The impact-absorbing portion 22A may absorb a portion of an impact load applied in the vehicle front-and-rear direction by compressively deforming in the vehicle front-and-rear direction. A bumper reinforcement 24 that extends in the vehicle width direction is assembled to distal end portions of the impact-absorbing portions 22A (see Fig. 3).

The insertion-receiving portion 22B is formed in a square tube shape that extends in the vehicle front-and-rear direction, by extension to the vehicle rear side of the tubular portion 22A1. The protruding portion 16 is insertable into the inside of the insertion-receiving portion 22B. A penetrating portion 26 corresponding with the penetrating portion 18 and a penetrating portion 28 corresponding with the penetrating portion 20 are respectively provided in a region at the vehicle width direction outer side of the insertion-receiving portion 22B and a region at the vehicle width direction inner side of the insertion-receiving portion 22B.

In a state in which the protruding portion 16 is inserted into the insertion-receiving portion 22B, the penetrating portion 18 is in a state of alignment with the penetrating portions 26 and the penetrating portion 20 is in a state of alignment with the penetrating portions 28. In this state, a shaft portion 30A of a bolt 30 that serves as a joining member is inserted into the penetrating portion 18 and the penetrating portions 26, a nut 32 is fastened to the shaft portion 30A, a shaft portion 34A of a bolt 34 that serves as a joining member is inserted into the penetrating portion 20 and the penetrating portions 28, and a nut 36 is fastened to the shaft portion 34A. Thus, the crash box 22 is assembled to the protruding portion 16.

In the present exemplary embodiment, in the state in which the protruding portion 16 is inserted into the insertion-receiving portion 22B, at least one of the side wall portions 16A of the protruding portion 16 is in a state of area contact with an inner face of the insertion-receiving portion 22B.

### - Operation and Effects of the Present Exemplary Embodiment -

Now, operation and effects of the present exemplary embodiment are described.

In the present exemplary embodiment, as shown in Fig. 3, the front part 12 that is a metal casting is provided, and the front part 12 is provided with the main body portion 14. Therefore, in the present exemplary embodiment, for example, a site of the vehicle body 10 at which structure is complex is formed by the main body portion 14, and fabrication procedures of the vehicle body 10 may be simplified.

In the present exemplary embodiment, the crash box 22 is provided, and a portion of the vehicle body 10 is formed by the crash box 22.

When the front part 12 and the crash box 22 are joined, a portion that joins the front part 12 and the crash box 22 is necessary, which is subject to tension from the bolt 30 and the bolt 34. However, if a separate spacer or the like that is subject to tension from the bolt 30 and bolt 34 is arranged, fabrication procedures of the vehicle body 10 are likely to be more complex.

In the present exemplary embodiment, as shown in Fig. 1, the front part 12 is provided with the protruding portion 16 protruding from the main body portion 14. In the state in which the protruding portion 16 is inserted into the insertion-receiving portion 22B provided at the crash box 22, the protruding portion 16 and the insertion-receiving portion 22B may be joined by the bolt 30 and bolt 34. Therefore, tension generated when the protruding portion 16 and insertion-receiving portion 22B are joined by the bolt 30 and bolt 34 may be borne by the protruding portion 16.

In the present exemplary embodiment, the protruding portion 16 protrudes in the vehicle front-and-rear direction from the main body portion 14, and is inserted into the insertion-receiving portion 22B in the vehicle front-and-rear direction. The protruding portion 16 and the insertion-receiving portion 22B make area contact in the vehicle width direction. Therefore, in the present exemplary embodiment, when a load around the vehicle front-and-rear direction acts on the protruding portion 16 and insertion-receiving portion 22B, shifting of a positional relationship between the protruding portion 16 and the insertion-receiving portion 22B may be suppressed.

In the present exemplary embodiment, the bolt 30 and the bolt 34 join the protruding portion 16 with the insertion-receiving portion 22B in a direction orthogonal to the vehicle front-and-rear direction, specifically the vehicle width direction. Thus, a load around the vehicle front-and-rear direction that acts on the protruding portion 16 and insertion-receiving portion 22B may be borne by the bolt 30 and bolt 34.

In the present exemplary embodiment, the bolt 30 is provided with the shaft portion 30A and the bolt 34 is provided with the shaft portion 34A, and the shaft portion 30A and shaft portion 34A are inserted into the protruding portion 16 and the insertion-receiving portion 22B in the vehicle width direction. Therefore, stiffness of sites of joining between the protruding portion 16 and the insertion-receiving portion 22B with respect to a load around the vehicle front-and-rear direction may be assured.

In the present exemplary embodiment, the rib portion 16F is provided at the protruding portion 16. The rib portion 16F extends in the protrusion direction of the protruding portion 16 from the main body portion 14. Thus, stiffness of the protruding portion 16 with respect to a load in a direction orthogonal to the protrusion direction may be assured.

In the present exemplary embodiment, the curved surface portion 16D1 is provided in the region at the vehicle upper side of the distal end portion of the protruding portion 16. The curved surface portion 16D 1 curves so as to protrude to the vehicle upper side as seen in the vehicle width direction. As a result, resistance when the protruding portion 16 is inserted into the insertion-receiving portion 22B may be reduced.

In the present exemplary embodiment, as shown in Fig. 2, the lower edge portion 16A1 in the region at the vehicle front side of the protruding portion 16 slopes downward from the vehicle front side toward the vehicle rear side as seen in the vehicle width direction. Therefore, lengths in the vehicle vertical direction of the region at the vehicle front side of the protruding portion 16 are shorter toward the vehicle front side, and the protruding portion 16 may be more easily inserted into the insertion-receiving portion 22B.

In the present exemplary embodiment, a portion of an impact load applied in the vehicle front-and-rear direction may be absorbed by the impact-absorbing portion 22A of the crash box 22 compressively deforming in the vehicle front-and-rear direction. Because the protruding portion 16 is inserted into the insertion-receiving portion 22B provided at the crash box 22, when the crash box 22 is being assembled to the front part 12, the protruding portion 16 may be used as a guide for guiding the crash box 22 to an assembled position.

In the present exemplary embodiment, the main body portion 14 of the front part 12 that is a metal casting includes the wheel well portion 14A2 that is capable of accommodating a portion of a tire. As a result, a number of components structuring the vehicle body 10 may be reduced compared to a structure in which the protruding portion 16 and the wheel well are structured by separate components.

Additionally in the present exemplary embodiment, the main body portion 14 of the front part 12 that is a metal casting includes the pair of wheel well portions 14A2 that are disposed to be spaced apart in the vehicle width direction and the connecting portion 14B that links these wheel well portions 14A2 in the vehicle width direction. Therefore, in the present exemplary embodiment, the pair of wheel well portions 14A2 may be assembled to the vehicle body 10 as a single component during fabrication of the vehicle body 10. Thus, fabrication procedures of the vehicle body 10 may be simplified while a number of components structuring the vehicle body 10 is reduced.

Now, a fabrication process of the vehicle body 10 according to the present exemplary embodiment is described with reference to Fig. 3.

In a fabrication procedure of the vehicle body 10 according to the present exemplary embodiment, the front part 12 that is provided with the main body portions 14 and the protruding portions 16 protruding from the main body portions 14 is cast. At this time, a mold opening direction of a casting mold that casts the front part 12 corresponds to the vehicle body vertical direction when the vehicle body 10 is completed, that is, the vehicle vertical direction.

Subsequently, each protruding portion 16 is inserted into the insertion-receiving portion 22B provided at the crash box 22, and the bolt 30 and bolt 34 are used to join the protruding portion 16 with the insertion-receiving portion 22B.

Thus, the vehicle body structure of the vehicle body 10 and vehicle body fabrication process of the vehicle body 10 according to the present exemplary embodiment may assure joining strength between a cast vehicle body structural component and another vehicle body structural component while suppressing an increase in complexity of vehicle body fabrication procedures of the vehicle body 10.

### = Second Exemplary Embodiment =

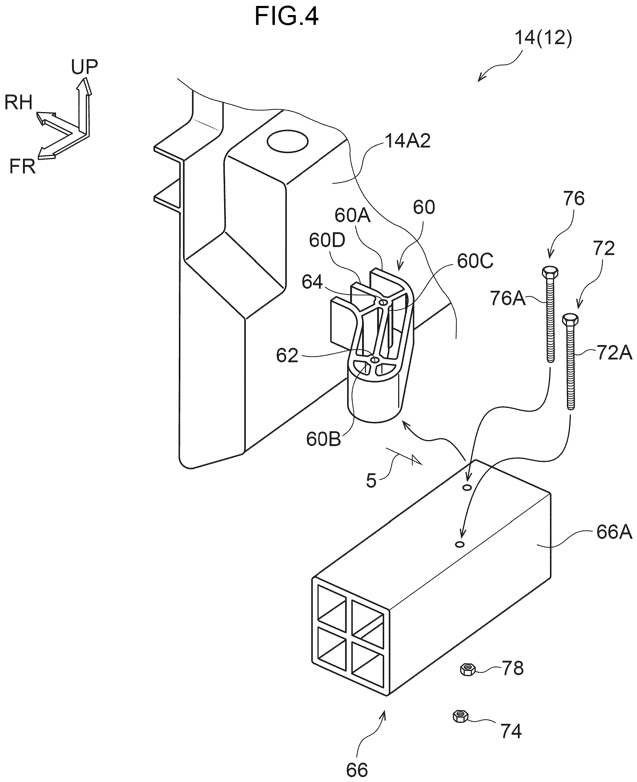

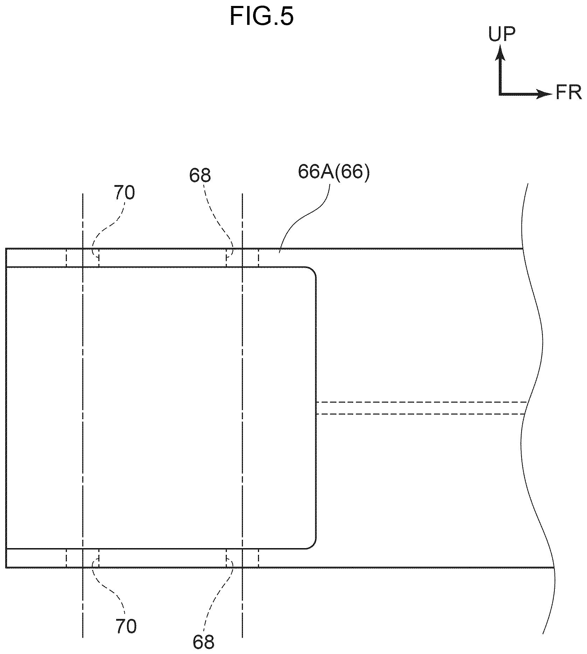

Now, a vehicle body portion structure according to a second exemplary embodiment of the present disclosure is described using Fig. 4 and Fig. 5. Structural elements in common with the first exemplary embodiment described above are assigned the same reference symbols, and descriptions thereof are omitted as appropriate.

A characteristic of the present exemplary embodiment is that a protruding portion 60 protrudes to the vehicle width direction inner side from each wheel well portion 14A2 of the main body portion 14 of the front part 12.

In more detail, the protruding portion 60 includes a peripheral wall portion 60A that structures an outer periphery, a brace portion 60B, a brace portion 60C and reinforcing rib portions 60D.

In further detail, seen in the vehicle vertical direction, one end portion of the peripheral wall portion 60A protrudes to the vehicle front side from the wheel well portion 14A2, a region at the vehicle front side of the peripheral wall portion 60A is curved to form a protrusion to the vehicle front side, and another end portion of the peripheral wall portion 60A is linked to the wheel well portion 14A2 at the vehicle rear side relative to the one end portion.

The brace portion 60B is disposed at the vehicle front side at the inner periphery side of the peripheral wall portion 60A, and is formed in a circular column shape extending in the vehicle vertical direction. A penetrating portion 62 that penetrates in the vehicle vertical direction is formed in a central portion of the brace portion 60B as seen in the vehicle vertical direction.

The brace portion 60C is disposed at the inner periphery side of the peripheral wall portion 60A, to the vehicle rear side of the brace portion 60B, and is formed in a circular column shape extending in the vehicle vertical direction. A penetrating portion 64 that penetrates in the vehicle vertical direction is formed in a central portion of the brace portion 60C as seen in the vehicle vertical direction.

The reinforcing rib portions 60D link to peripheries of the brace portion 60B and the brace portion 60C at the inner periphery side of the peripheral wall portion 60A. More specifically, the reinforcing rib portions 60D link the brace portion 60B with the brace portion 60C, the peripheral wall portion 60A with the brace portion 60B and the brace portion 60C, and the brace portion 60B with the wheel well portion 14A2.

Meanwhile, a crash box 66 serving as the second vehicle body structural component has a basically similar structure to the crash box 22. However, as illustrated in Fig. 5, an insertion-receiving portion 66A is open to the vehicle width direction outer side.

A penetrating portion 68 corresponding with the penetrating portion 62 and a penetrating portion 70 corresponding with the penetrating portion 64 are respectively provided in a region at the vehicle upper side of the insertion-receiving portion 66A and a region at the vehicle lower side of the insertion-receiving portion 66A.

In a state in which the protruding portion 60 is inserted into the insertion-receiving portion 66A, the penetrating portion 62 is in a state of alignment with the penetrating portions 68 and the penetrating portion 64 is in a state of alignment with the penetrating portions 70. In this state, a shaft portion 72A of a bolt 72 that serves as a joining member is inserted into the penetrating portion 62 and the penetrating portions 68, a nut 74 is fastened to the shaft portion 72A, a shaft portion 76A of a bolt 76 that serves as a joining member is inserted into the penetrating portion 64 and the penetrating portions 70, and a nut 78 is fastened to the shaft portion 76A. Thus, the crash box 66 is assembled to the protruding portion 60.

In the present exemplary embodiment with the structure described above, the same operations and effects as in the above-described first exemplary embodiment are realized, excluding the operation and effects of inserting the protruding portion 16 into the insertion-receiving portion 22B of the crash box 22 in the vehicle front-and-rear direction.

In the present exemplary embodiment, because the protruding portion 60 is inserted into the insertion-receiving portion 66A of the crash box 66 in the vehicle width direction, the crash box 66 may be arranged to be disposed further to the vehicle width direction inner side than in the first exemplary embodiment, enabling conformity with the specifications of various types of vehicles.

### = Supplementary descriptions of the exemplary embodiments =

(1) In the exemplary embodiments described above, a crash box is assembled to each protruding portion of the front part 12. However, depending on vehicle specifications and the like, a component other than a crash box may be assembled to the protruding portion. Further, a fastening member other than a bolt, such as a rivet or the like, may be employed for assembly of a component to the protruding portion.
(2) Depending on vehicle specifications and the like, the exemplary embodiments described above may be applied to the rear part fabricated of die-cast aluminium that structures portions at the vehicle rear side.

## Claims

1. A vehicle body structure comprising:
a first vehicle body structural component (12) that is a metal casting, the first vehicle body structural component including a main body portion (14) and a protruding portion (16) that protrudes from the main body portion;
a second vehicle body structural component (22) including an insertion-receiving portion (22B) in which the protruding portion (16) is insertable; and
a joining member (30, 34) configured to join the protruding portion (16) with the insertion-receiving portion (22B).

2. The vehicle body structure according to claim 1, wherein:
the protruding portion protrudes from the main body portion in a vehicle front-and-rear direction, and is insertable into the insertion-receiving portion in the vehicle front-and-rear direction, and
the protruding portion and the insertion-receiving portion are configured to make area contact in at least one of a vehicle vertical direction or a vehicle width direction.

3. The vehicle body structure according to claim 2, wherein the joining member is configured to join the protruding portion with the insertion-receiving portion in a direction orthogonal to the vehicle front-and-rear direction.

4. The vehicle body structure according to claim 3, wherein the joining member includes a shaft portion (30A) that is insertable into the protruding portion and insertion-receiving portion in the direction orthogonal to the vehicle front-and-rear direction.

5. The vehicle body structure according to any one of claims 1 to 4, wherein the protruding portion includes a rib portion (16F) that extends along a protrusion direction in which the protruding portion protrudes from the main body portion.

6. The vehicle body structure according to any one of claims 2 to 4, wherein a curved surface portion (16D1) is provided at a region at a vehicle upper side of a distal end portion of the protruding portion, the curved surface portion curving to form a protrusion to the vehicle upper side as seen in the vehicle width direction.

7. The vehicle body structure according to claim 6, wherein a lower edge portion (16A1) of a region at a vehicle front side of the protruding portion slopes downward from the vehicle front side toward a vehicle rear side as seen in the vehicle width direction.

8. The vehicle body structure according to any one of claims 1 to 7, wherein the second vehicle body structural component is a crash box (22) including:
the insertion-receiving portion (22B); and
an impact-absorbing portion that is capable of absorbing a portion (22A) of an impact load applied in a vehicle front-and-rear direction by compressively deforming in the vehicle front-and-rear direction.

9. The vehicle body structure according to any one of claims 1 to 8, wherein the main body portion includes a wheel well portion (14A2) capable of accommodating a portion of a tire.

10. The vehicle body structure according to claim 9, wherein the main body portion includes:
a pair of wheel well portions disposed to be spaced apart in a vehicle width direction; and
a connecting portion (14B) that links the wheel well portions in the vehicle width direction.

11. A vehicle body fabrication process comprising:
casting a first vehicle body structural component (12) including a main body portion (14) and a protruding portion (16) that protrudes from the main body portion (14);
inserting the protruding portion (16) into an insertion-receiving portion (22B) provided at a second vehicle body structural component (22); and
joining the protruding portion (16) with the insertion-receiving portion (22B) by a joining member (30, 34).
